**Europäisches Patentamt**

**European Patent Office**

**Office européen des brevets**

(19)

(11) Veröffentlichungsnummer: **0 046 456**
**B1**

(12) # EUROPÄISCHE PATENTSCHRIFT

(45) Veröffentlichungstag der Patentschrift:
**21.09.83**

(51) Int. Cl.³: **H 01 S 3/097**

(21) Anmeldenummer: **81890132.4**

(22) Anmeldetag: **28.07.81**

(54) Einrichtung zur Strombegrenzung bei der Stromversorgung von Gaslasern.

(30) Priorität: **14.08.80 AT 4166/80**

(43) Veröffentlichungstag der Anmeldung:
**24.02.82 Patentblatt 82/8**

(45) Bekanntmachung des Hinweises auf die Patenterteilung:
**21.09.83 Patentblatt 83/38**

(84) Benannte Vertragsstaaten:
**BE CH DE FR GB IT LI SE**

(56) Entgegenhaltungen:
**DE-A-2 716 005**

**PATENT ABSTRACTS OF JAPAN, Band 5, Nr. 34(E-48)
(706), 4. März 1981**

**SOV. J. QUANT. ELECTRON., Band 5, Nr. 1, Juli 1975,
Seiten 96-98 New York, U.S.A., P.A. BOKHAN et al.:
"Sealed copper vapor laser"**

(73) Patentinhaber: **VOEST-ALPINE Aktiengesellschaft,
Werksgelände, A-4010 Linz (AT)**

(72) Erfinder: **Reif, Werner, Dr., Alleiten 22,
A-3400 Klosterneuburg (AT)**
Erfinder: **Schuöcker, Dieter, Prof. Dr.,
Veitingergasse 30/5, A-1130 Wien (AT)**

(74) Vertreter: **Wolfram, Gustav, Dipl.-Ing.,
Schwindgasse 7 P.O. Box 205, A-1041 Wien (AT)**

### Einrichtung zur Strombegrenzung bei der Stromversorgung von Gaslasern

Die Erfindung betrifft eine Einrichtung zur Strombegrenzung bei der Stromversorgung von elektrisch angeregten Gaslasern mit einem Drehstromtransformator, mit einer Drehstromgleichrichterbrücke vorgeschalteten Selbstinduktivitäten und gegebenenfalls einem Kondensator.

Bei elektrisch angeregten Gaslasern muss im Raum innerhalb des optischen Resonators eine Glimmentladung zur Ausbildung eines sogenannten Plasmas aufrechterhalten werden, wobei die Betriebsspannung eines solchen Lasers umso höher zu wählen ist, je höher der Druck des anzuregenden Gases ist, welches Gas beispielsweise Ar, Kr, Xe, F, $N_2O$, HF, $N_2$, CO, $CO_2$ und He enthalten kann, und je weiter die Elektroden voneinander entfernt sind.

Wird nun an die Elektroden eines Gaslasers eine hinreichend hohe Spannung angelegt, so zündet eine Gasentladung, und es bildet sich zunächst eine enger Durchbruchskanal. Wird der im Durchbruchskanal fliessende Strom so rasch gesteigert, dass der primäre Entladungskanal keine Zeit hat, sich seitlich zu erweitern, so treten dort hohe Stromdichten auf, welche zu einer sehr starken Erwärmung des Kanals führen, wodurch sich schliesslich eine Entladung in Form eines elektrischen Lichtbogens ausbildet. Diese Entladungsform ist infolge der darin herrschenden hohen Temperaturen zur Anregung des Lasergases nicht geeignet.

Von entscheidendem Einfluss auf die Anregung der Gasmoleküle, beispielsweise von $CO_2$-Molekülen, ist die Feldstärke E in der Entladung, da der Energiegewinn der Elektronen zwischen zwei Zusammenstössen mit Gasmolekülen dem Wert von $\frac{E}{p}$ proportional ist (p = Druck). Bei

$$\frac{E}{p} = \frac{0{,}075 \, V}{Pa.cm}$$

werden etwa 70% der von den Elektronen abgegebenen Energie zur erwünschten Anregung von Schwingungen der Gasmoleküle angewendet, während bei Einhaltung dieser Relation nur ein kleiner Teil der Elektronenenergie zur Anregung der Elektronenhülle bzw. zur Ionisierung der Atome dient und somit im Hinblick auf die erzielbare optische Ausgangsleistung verloren geht.

Bei Drücken über etwa 0,133 bar und beim Überschreiten eines kritischen Wertes der Stromstärke wird eine Glimmentladung allerdings instabil und kontrahiert ausserordentlich leicht zu einem Bogenkanal. Wie bereits erwähnt, ist zur Anregung jedoch nur eine Glimmentladung infolge der in einer solchen vorliegenden niedrigen Gastemperatur, jedoch gleichzeitig sehr hohen Elektronenenergie, geeignet. Der für den Übergang von einer Glimm- zu einer Bogenentladung benötigte Zeitraum liegt in der Grössenordnung von einigen Mikrosekunden (µs), so dass ein räumlich homogenes Plasma bei höheren Gasdrücken als etwa 0,133 bar nur wenige µs lang aufrecht erhalten werden kann (siehe z.B. W.W. Duley, $CO_2$-Lasers, Effects and Applications, Academic Press, New York, S. Francisco, London 1976, Seiten 15 bis 72, insbesondere Seiten 36 bis 39).

Zur Verhinderung des Übergangs in eine Bogenentladung verwendet man üblicherweise entsprechend grosse Vorwiderstände, welche den Strom begrenzen, so dass bei vorgegebener Versorgungsspannung der Entladungsstrom nicht über einen bestimmten Wert ansteigen kann. Je grösser der negative differentielle Widerstand der Glimmentladung ist, umso grösser muss man den Vorwiderstand wählen, um einen stabilen Arbeitspunkt einstellen zu können.

Bei relativ hohen Drücken werden vielfach unterteilte Elektroden eingesetzt. Dabei treten Entladungsinstabilitäten und -inhomogenitäten auf, welche wieder durch hohe Ohm'sche Vorwiderstände an jeder Teilelektrode verhindert werden können. Das Vorschalten solcher Widerstände hat den ausserordentlich grossen Nachteil, dass etwa so viel elektrische Leistung wie in der Gasentladung selbst im Vorwiderstand verbraucht und als Verlustwärme abgegeben wird. $CO_2$-Laser der voranstehend beschriebenen Art mit segmentierten Anoden und luftgekühlten Ballastwiderstandsketten sind beispielsweise im Prospekt 2/79 (1979) der Fa. Kristalloptik-Laserbau GmbH unter den Typenbezeichnungen KEL T51 und KEL T52 beschrieben; die Hochspannungsversorgung erfolgt dort mittels eines Drehstromtransformators mit nachgeschalteter Drehstrom-Brückengleichrichtung.

Aus der US-A- 3,758,877 ist es bekannt geworden, einen elektrisch angeregten, kontinuierlich arbeitenden $CO_2$-Gaslaser mit einem Stromversorgungsteil zu betreiben, welcher eine Stromquelle für Wechselstrom von hoher Frequenz, einen Gleichrichter, einen Filterkondensator in Parallelschaltung und eine Induktivität in Serienschaltung umfasst. Dabei ist wesentlich, dass die Frequenz des Wechselstromes einen bestimmten Wert übersteigt, u.zw. jenen Grenzwert, welcher den Bereich negativen differentiellen Widerstandes der Laser-Entladungsröhre bei niedrigen Frequenzen von jenem positiven differentiellen Widerstand scheidet. Der erwähnte Grenzwert liegt im allgemeinen in der Grössenordnung von 1 kHz.

Bei einer solchen Anordnung muss hochfrequenter Wechselstrom erzeugt werden, was allein schon einen erheblichen Aufwand erfordert. Die gesamte Anordnung muss abgeschirmt werden, um Störungen der Umgebung durch hochfrequente Streufelder zu vermeiden. Zur Glättung des erzeugten pulsierenden Gleichstromes wird zusätzlich ein Kondensator benötigt.

Aus der DE-A- 26 57 893 ist eine gepulste Stromversorgung für einen Gasentladungslaser bekannt, bei der eine Hauptgleichstromversorgung in Reihe mit einer strombegrenzten Gleichstromversorgung und den Laserelektroden geschaltet ist und wobei Diodeneinrichtungen über die zweite Stromversorgung geschaltet sind, um diese zu umgehen und Spannung von der Hauptstromversorgung an die Laserelektroden zu legen, nachdem das Lasergas ionisiert wurde. Nach einer bevorzugten Ausführungsform dieses Stromversorgungsteiles ist als zweite Stromversorgung ein Drehstromtrafo mit Drehstromgleichrichterbrücke vorgesehen, um ohne Kondensator auskommen zu können und somit eine kurze Erholzeit der Stromversorgung zu gewährleisten. Die zwischen der Quelle für dreiphasigen Wechselstrom und den Primärwicklungen geschalteten Drosselspulen dienen offensichtlich zur Dämpfung der Einschaltstromstösse, sie unterstützen das gemäss der DE-OS 26 57 893 angestrebte Verhalten, die Spannung der Drehstromversorgung unter Last auf praktisch Null zu reduzieren, weil der hohe Primärstrom des Trafos in den Drosseln einen beträchtlichen Spannungsabfall und damit eine wesentlich kleinere Primärspannung bewirkt (Seite 8 der DE-A- 26 57 893).

Die Erfindung stellt sich die Aufgabe, einen Stromversorgungsteil mit selbsttätiger Strombegrenzung und geringerer Verlustleistung für Gaslaser zu schaffen, welcher mit niedrigfrequentem Wechselstrom ohne vorangehende Umwandlung in höherfrequenten arbeitet, und wobei die gelieferte hohe Gleichspannung ohne eigenes Glättungsglied, wie einen Kondensator, direkt an einen Gaslaser gelegt werden kann.

Die gestellte Aufgabe wird bei einer Einrichtung der eingangs definierten Art dadurch gelöst, dass in jeden Phasenleiter eine Induktivität zwischen der Sekundärseite des vorzugsweise bei Netzfrequenz arbeitenden Drehstrom-Transformators und der Drehstromgleichrichterbrücke geschaltet ist.

Die drei Induktivitäten sind zweckmässig gleich gross zu wählen. Die Induktivitäten ersetzen die bei der Gasanregung von dauerstrichbetriebenen Lasern bisher verwendeten Vor(Ballast)widerstände.

In dem Werk «Electric Discharge Lamps» von J.F. Waymouth, The M.I.T. Press, Cambridge, Massachusetts, and London, England, Seiten 307 bis 334, sind Stromversorgungsteile für Entladungslampen, bei denen die Strom-Spannungs-Kennlinie gleichfalls fallend ist, beschrieben. Die Verluste an Ohm'schen Widerständen werden dort denjenigen an Wechselstromwiderständen gegenübergestellt und die Verhältnisse bei Verwendung verschiedener Schaltungen eingehend diskutiert.

Die zur Ummagnetisierung des Kerns einer Drossel benötigte Leistung ist demnach viel kleiner als die thermische Verlustleistung eines Ohm'schen Vorwiderstandes; die Verluste bei einem von einer erfindungsgemässen Einrichtung gespeisten Laser betragen im Vergleich zu einem solchen mit Ohm'schen Vorwiderständen nur etwa 1/5. Der Gesamtwirkungsgrad eines Lasers, welcher mittels einer erfindungsgemässen Einrichtung betrieben wird, wird somit entscheidend verbessert.

Der Wechselstromwiderstand $\omega L$ der drei Drosseln muss grössenordnungsmässig gleich einem für dieselbe Entladung notwendigen Ohm'schen Vorwiderstand sein.

Vorzugsweise sind als Induktivitäten Drosseln von jeweils 10 bis 20 Henry eingebaut. Dies entspricht einer Impedanz von 3,1 bis 6,3 k$\Omega$ bei Netzfrequenz von 50 Hz.

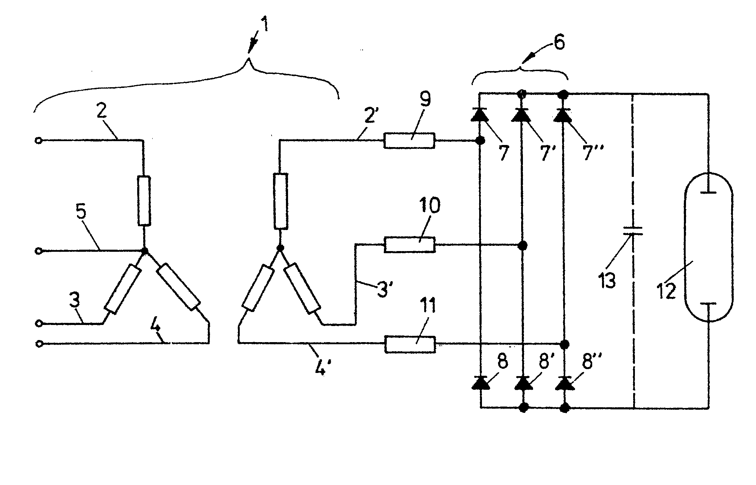

In der Zeichnung ist das Schaltungsprinzip einer erfindungsgemässen Einrichtung im Zusammenwirken mit einer Laserentladungsröhre erläutert, wobei mit 1 allgemein ein Drehstrom-Transformator – u.zw. im gezeigten Beispiel in Stern-Stern-Schaltung – mit den Phasenleitern 2, 3, 4 bzw. 2', 3', 4' und dem Nulleiter 5 bezeichnet ist. Die Drehstromgleichrichterbrücke 6 mit den elektrischen Ventilen 7, 7', 7'' und 8, 8', 8'' ist einerseits über die Drosseln 9, 10 und 11 mit den sekundärseitigen Phasenleitern 2'; 3' und 4' und andererseits mit der schematisch dargestellten Laser-Entladungsröhre 12 verbunden. Parallel zur Entladungsröhre kann zwischen Drehstromgleichrichterbrücke und Röhre noch ein Kondensator 13 geschaltet sein, dessen Zuleitungen im gezeigten Ausführungsbeispiel strichliert eingezeichnet sind.

Als Einzelgleichrichter können in der Gleichrichterbrücke Bauelemente wie Halbleiterdioden verwendet werden.

Wird die Primärseite des Transformators beispielsweise an das normale Stromnetz mit einer Frequenz von etwa 50 Hz angeschlossen, so entsteht sekundärseitig eine entsprechende dreiphasige Hochspannung. Die Stärke des fliessenden Wechselstromes wird durch die Drosseln begrenzt. Da bei allen Gleichrichterbrückenschaltungen eine genau definierte Beziehung zwischen den Wechselstromeffektivwerten und dem Gleichstrom besteht, wird mittels dieser Drosseln gleichzeitig auch die maximale Höhe des in der Glimmentladung fliessenden Gleichstromes festgelegt, solange die einzelnen Phasenspannungen nicht verändert werden.

Der von der Gleichrichterbrücke erzeugte Gleichstrom ist infolge der Phasenüberlagerung so gut geglättet, dass auf einen eigenen Glättungskondensator (13) in den meisten Fällen verzichtet werden kann. Dies ist günstig, weil unter Umständen Ausgleichsvorgänge zwischen den Drosseln und dem Kondensator stattfinden können. Bei einer Drehstromgleichrichterbrücke sind darüber hinaus immer wenigstens zwei elektrische Ventile in Durchlassrichtung gepolt, so dass keine Probleme hinsichtlich der von den einzelnen Drosseln bewirkten Phasenverschiebungen zwischen Strom und Spannung auftreten können.

Die erfindungsgemässe Einrichtung eignet sich z.B. insbesondere für die Stromversorgung der Hilfsentladung eines pulsweise arbeitenden transversal elektrisch angeregten (TEA-)Lasers, wie er beispielsweise in der unter der

Nr. 0 011 062 veröffentlichten europäischen Patentanmeldung beschrieben ist.

Auch bei sogenannten «pin»-Elektroden-Lasern mit Dauerstrichbetrieb ist die Stromversorgung mit einer erfindungsgemässen Einrichtung pro Spitzenelektrode (pin) bestens gewährleistet. Die Arbeitsweise und der Aufbau solcher Laser sind auf den Seiten 36 bis 44 des Werkes «$CO_2$-Lasers, Effects and Applications» von W. W. Duley, Academic Press, New York, S. Francisco, London 1976, dargelegt.

## Patentansprüche

1. Einrichtung zur Strombegrenzung bei der Stromversorgung von elektrisch angeregten Gaslasern mit einem Drehstrom-Transformator (1), mit einer Drehstromgleichrichterbrücke (6) vorgeschalteten Selbstinduktivitäten (9, 10, 11) und gegebenenfalls einem Kondensator (13), dadurch gekennzeichnet, dass in jeden Phasenleiter (2', 3', 4') eine Induktivität (9, 10, 11) zwischen der Sekundärseite des vorzugsweise bei Netzfrequenz arbeitenden Drehstrom-Transformators (1) und der Drehstromgleichrichterbrücke (6) geschaltet ist.

2. Einrichtung nach Anspruch 1, dadurch gekennzeichnet, dass als Induktivitäten Drosseln (9, 10, 11) von jeweils 10 bis 20 Henry eingebaut sind.

## Claims

1. Arrangement for the current limitation during the current supply of electrically excited gas lasers comprising a rotary current transformer (1), self-inductances (9, 10, 11) provided in front of a rotary current bridge rectifier (6), and, if desired, a capacitor (13), characterized in that an inductance (9, 10, 11) is provided in each phase conductor (2', 3', 4') between the secondary side of the rotary current transformer (1) preferably working at power frequency and the rotary current bridge rectifier (6).

2. Arrangement according to claim 1, characterized in that chokes (9, 10, 11) of 10 to 20 Henry each are installed as inductances.

## Revendications

1. Dispositif pour limiter le courant d'alimentation électrique de lasers à gaz excités électriquement, comprenant un transformateur triphasé (1), des auto-inductances (9, 10, 11) précédant un pont redresseur triphasé (6) et, éventuellement, un condensateur (13), caractérisé en ce qu'une inductance (9, 10, 11) est montée dans chaque conducteur de phase (2', 3', 4') entre le côté secondaire du transformateur triphasé (1), travaillant de préférence à la fréquence du secteur, et le pont redresseur triphasé (6).

2. Dispositif selon la revendication 1, caractérisé en ce que les inductances sont formées chacune d'une bobine de self-induction (9, 10, 11) de 10 à 20 Henry.